# EUROPEAN PATENT APPLICATION

(11) **EP 3 557 042 A1**
(43) Date of publication of application: **23.10.2019**
(21) Application number: 18167871.5
(22) Date of filing: 18.04.2018
(51) Int. Cl.: F03D 1/06, F03D 80/50, F03D 80/70, F16C 17/03

(54) **METHOD FOR REFURBISHING A ROTARY BEARING, BEARING REFURBISHMENT ARRANGEMENT AND WIND TURBINE**

(71) Applicant: Siemens Gamesa Renewable Energy A/S, 7330 Brande (DK)
(72) Inventor: Frydendal, Niels Karl, 7400 Herning (DK); Kanstrup, Troels, 8763 Rask Moelle (DK); Olesen, Dennis, 8200 Aarhus (DK); Soee, Jeppe, 8410 Ronde (DK); Thomsen, Kim, 9520 Skørping (DK); Thorhauge, Morten, 8200 Aarhus (DK)
(74) Representative: Aspacher, Karl-Georg

(57) **Abstract**

Method for refurbishing a rotary bearing (7, 8), especially a rotary bearing (7, 8) of a wind turbine (1), the bearing (7, 8) comprising a fixed component (13) that supports a moving component (9) during the operation of the bearing (7, 8), wherein the fixed component (13) or the moving component (9) comprises a raceway (14) of the bearing (7, 8), wherein a roughness of the raceway (14) is reduced by adding material to and/or removing material from the raceway (14).

## Description

The invention concerns a method for refurbishing a rotary bearing, especially a rotary bearing of a wind turbine, the bearing comprising a fixed component that supports a moving component during the operation of the bearing, wherein the fixed component or the moving component comprises a raceway of the bearing. The invention also concerns a bearing refurbishment arrangement and a wind turbine.

The increasing size of wind turbines and the trend towards offshore turbines puts high demands on serviceability and robustness of the used bearings. Currently rolling element bearing systems are used in most cases that cannot provide the required robustness. The fact that large wind turbines have large dynamic shaft deflections, high loads and low speeds also makes it difficult for plain bearings to work and last for the demanded lifetime. To replace roller bearings or ball bearings it is typically necessary to disassemble the drive train of the wind turbine, the generator and/or the hub with the blades. This type of service often require crane capacity and will therefore be expensive and time consuming, especially for wind turbines located offshore.

The previously described situation can be improved by using fluid film bearings. In these bearings the fixed side is typically provided with a multitude of bearing pads that can pivote with respect to the fixed component. During operation a fluid film exists between these bearing pads and the moving component, thereby reducing friction. Due to the reduced friction there is less need for servicing such fluid film bearings. If individual bearing pads are damaged, they can be replaced individually, therefore also allowing for a relatively fast and inexpensive repair of the wind turbine.

Even when using fluid film bearings, a damage to the main shaft that typically comprises the raceways used in the bearing necessitates the replacement of the main shaft. A replacement of the main shaft involves the use of heavy duty lifting equipment and is expensive and time consuming.

The aim of the invention is therefore to further reduce the need for heavy lifting equipment, the down time and the cost of servicing bearings of heavy machinery, especially of wind turbines.

This problem is solved by the initially discussed method, wherein a roughness of the raceway is reduced by adding material to and/or removing material from the raceway.

It was realized that in most cases a failure of a bearing, especially a fluid bearing, due to a damage of the shaft is simply due to the fact that the roughness or geometrical tolerance of the raceway increases beyond a certain threshold that is necessary to form a fluid sliding surface. It is therefore often not necessary to swap the complete moving component of the bearing, e.g. the main shaft of a wind turbine. Instead the moving component is fixed according to the present invention by adding and/or removing material to or from the raceway to provide a smoother raceway.

The adding and/or removing of material can be done in-situ, e.g. while the main shaft of the wind turbine is still installed in the wind turbine. Therefore the complexity of the repair and the need to lift heavy equipment is reduced.

During the operation of the bearing the raceway can be in contact to the other component either directly via a lubricant arranged between the raceway and the other component or via mobile contact components, e.g. contact pads of a Michell/Kingsbury tilting-pad fluid bearing. Especially in the case of a tilting-pad fluid bearing all or some of the pads can be removed to allow for easy access to the raceway, therefore allowing for in-situ addition or removal of material.

The adding and removal of material can be combined. E.g. additional material can be added and surplus material can then be removed, e.g. by polishing the raceway.

The material can be removed by machining, especially turning, milling, broaching, grinding, honing, polishing, lapping or superfinishing. Adding of material can be performed by cold spray, thermal spraying, welding, ark spray, plasma spray, laser cladding or high velocity oxygen fuel coating.

The adding and/or removing of material can be performed while the component that comprises the raceway is mounted to a device comprising the bearing, especially a wind turbine, and/or while the moving component of the bearing extends through the fixed component of the bearing or vice versa. This allows for an in-situ refurbishment, especially of large components like the main shaft of a wind turbine. While it is possibly necessary to modify or remove smaller parts to access the moving or the fixed component of the bearing in the area of the raceway, the downtime of the bearing can still be massively reduced and cost for servicing the bearing can also be reduced.

Preferably machining chips are removed when machining in-situ. E.g. a strong vacuum cleaner can be used that can be arranged close to the machined area or a machining tool used. Alternatively the raceway can be cleaned after machining, e.g. by using a cleaning device similar to a carpet cleaner that can e.g. use cleaning detergent or oil remover to clean the raceway. When a fluid bearing is refurbished, it is typically desirable to avoid a contamination of the fluid or lubricant. The fluid or lubricant can therefore be removed from the raceway and only be added back after refurbishing the raceway.

The component that comprises the raceway can comprise an additional raceway that is used to form a bearing between the fixed and the movable component while the material is added or removed and/or the moving component can be supported by at least one further bearing of the device comprising the bearing while the material is added or removed. During the refurbishment of the raceway the moving component of the bearing should be held in a defined position and potentially be rotated. As the bearing is refurbished in-situ, the moving component is often already supported by multiple bearings during the operation of the bearing, e.g. an up-wind bearing and a down-wind bearing in a wind turbine. At least one of these bearings can also be used during refurbishment to further reduce the complexity of the repair.

It can also be possible to provide two or more raceways on the moving or fixed component for each of the bearings. In the case of damage to one of these raceways the bearing can simply be switched to the other raceway and therefore allow for a very fast repair of the bearing and therefore e.g. the wind turbine. A switching of the used raceway can e.g. be achieved by unmounting the tilting pads from the area of the fixed or moving component opposite to the first raceway and moving them to an area opposite to the second raceway or vice versa. Such an additional raceway can also be used to support the moving component during the refurbishment, thereby further reducing the complexity of the repair.

Preferably the moving component is rotated while the material is added to and/or removed from the raceway. This is especially advantageous when a device used for adding and/or removing material is attached to the fixed component and the moving component comprises the raceway or vice versa. A device used for adding and/or removing material to the raceway, e.g. the machining tool discussed later, can therefore be guided around the circumference of the moving component by the fixed component or vice versa. The moving component is especially rotated while supported by the further bearing of the device comprising the bearing and/or the bearing formed by the additional raceway while the material is added and/or removed.

A machining tool can be attached to the fixed component in such a way that is contacts the raceway that is formed by the moving component or vice versa, wherein the moving component is rotated with respect to the fixed component to move the machining tool along the raceway in the circumferential direction of the bearing to remove material from the raceway. The machining tool can be positively connected to the moving or the fixed component, e.g. by a sliding dovetail joint. It can e.g. be connected to pad stops that can carry the pads of a fluid bearing when the bearing is in use. To refurbish the bearing the pads are removed or shifted to a different raceway and the machining tool is installed instead of one of the pads.

By using a relative movement of the fixed and the moving component to guide the machining tool, machining can be performed by turning or boring.

The machining tool can comprise one cutting tool or multiple cutting tools, wherein the length of the contact area of the cutting tool in the axial direction or the bearing is shorter than the width of the raceway in the axial direction of the bearing or wherein the multiple cutting tools are spaced apart from each other in the axial direction of the bearing, wherein the moving component is rotated through multiple revolutions and wherein the cutting tool or cutting tools are shifted in the axial direction of the bearing between revolutions of the moving component and/or during at least one of the revolutions of the moving component. This can result in a turning or boring of the raceway along the moving component, e.g. along the shaft. The shift in the axial direction can especially be performed in an oscillating manner such that the direction is changed multiple times.

The machining tool can comprise one or multiple cutting tools wherein the moving component is rotated through multiple revolutions, wherein the cutting tool or cutting tools are shifted in the radial direction of the bearing between revolutions of the moving component and/or during at least one of the revolutions of the moving component. The raceway can especially be turned or bored to a first depth, then the radial position of the cutting tool can be adjusted and the raceway can be turned or bored to a second depth, etc. By using multiple passes to bore or turn to a certain depth the smoothness of the resulting surface can be improved.

The radial and/or axial adjustment of the cutting tool can especially be performed manually, e.g. by a respective hand wheel attached to the machining tool. The rotation of the moving component can e.g. be driven by a generator that is used as an electro motor, especially in the case of a wind turbine. After a certain degree of rotation, e.g. one or more multiple rotations, the rotation can be stopped, a worker can access the machining tool and adjust the radial and/or axial position of the cutting tool and the rotation can be restarted after the worker left the area of the moving component, e.g. the shaft. Alternatively electro mechanical actuators or other actuators can be used to perform the axial and/or radial movement, especially automatically.

The component that comprises the raceway can be a shaft, especially the main shaft, of a wind turbine. The raceway is preferably part of the circumferential surface of the shaft. The shaft can be supported by two or more rotary bearings. The described method can be used to refurbish all or some of those bearings.

The invention also concerns a bearing refurbishment arrangement, comprising a fixed component and a moving component designed to form a bearing and machining tool usable to remove material from a raceway of the bearing during a refurbishing of the bearing, especially during a refurbishing according to the method of the present invention, the raceway being formed by the moving or the fixed component, wherein the machining tool is attached in such a way to the fixed component that at least one cutting tool of the machining tool contacts the raceway of the moving component or vice versa.

A rotation of the moving part can therefore be used to remove material from the raceway, especially by turning or boring. As previously discussed this can be used to reduce the roughness of the raceway and therefore e.g. allow the use of the raceway in a fluid film bearing.

A moving component can be supported by a bearing formed by the moving and the fixed component using an additional raceway of the component that comprises the raceway and/or by at least one further bearing of the bearing refurbishment arrangement.

The machining tool can be positively attached to the fixed or the moving component, especially via a sliding dovetail junction. This allows for an easy installation and an exact positioning of the machining tool.

The contact area of the cutting tool in contact with the raceway in axial direction of the bearing can be shorter than the width of the raceway or multiple cutting tools can be spaced apart from each other in the axial direction of the bearing.

The cutting tool or tools can be attached to the fixed or the moving component via a shifting mechanism that allows for an axial and/or radial shifting of the cutting tool or tools. As previously discussed the shifting can especially be performed manually, e.g. via handwheels. The shifting mechanism can especially be a part of the machining tool.

The invention also concerns a wind turbine that comprises a bearing refurbishment arrangement according to the present invention.

The moving component can be the main rotor shaft of the wind turbine. The raceway that has the roughness reduced can be part of the rotor shaft. Two or more bearings can be used during the operation of the wind turbine to support the rotor shaft, at least one of them comprising two raceways. The unused raceway of at least one of these bearings can be refurbished as discussed above.

The wind turbine can comprise a crawl space between the moving and the fixed component that allows a worker to access the machining tool to mount or unmount the machining tool to or from the moving or the fixed component and/or to manually adjust the axial or radial position of the cutting tool or cutting tools of the machining tool.

Specific embodiments of the invention will be described in detail herein below with reference to the figures wherein the figures show schematically:
- Fig. 1: an embodiment of the wind turbine according to the present invention comprising a bearing refurbishment arrangement according to the present invention to perform a method of refurbishing a rotary bearing according to an embodiment of the present invention,
- Fig. 2 and 3: detailed views of the up-wind bearing of the wind turbine shown in fig. 1 within an installed machining tool, and
- Fig. 4: a detailed view of the machining tool schematically shown in fig. 2 and 3.

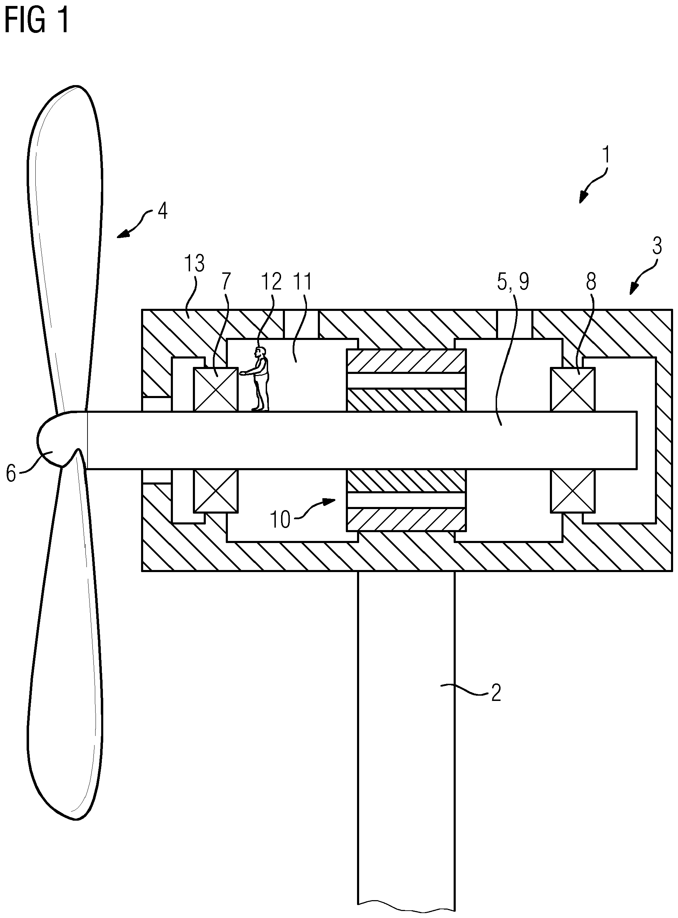

Fig. 1 shows a wind turbine 1 comprising a tower 2, a nacelle 3 and a rotor 4. The rotor 4 is connected to the main shaft 5 via the hub 6. The main shaft 5 is the moving component 9 of the up-wind bearing 7 and the down-wind bearing 8. In the embodiment shown in fig. 1 a generator 10 is arranged between the up-wind and the down-wind bearing 7, 8. In further embodiments the generator 10 could also be placed up-wind from the up-wind bearing 7 or down-wind from the down-wind bearing 8.

In the situation shown in figures 1 to 3 the wind turbine 1 is serviced by refurbishing the up-wind bearing 7. This refurbishing will be discussed in detail with reference to the figures 1 to 4. To allow easy access to the bearing 7 for servicing, the wind turbine 1 comprises a crawl space 11 for the worker 12.

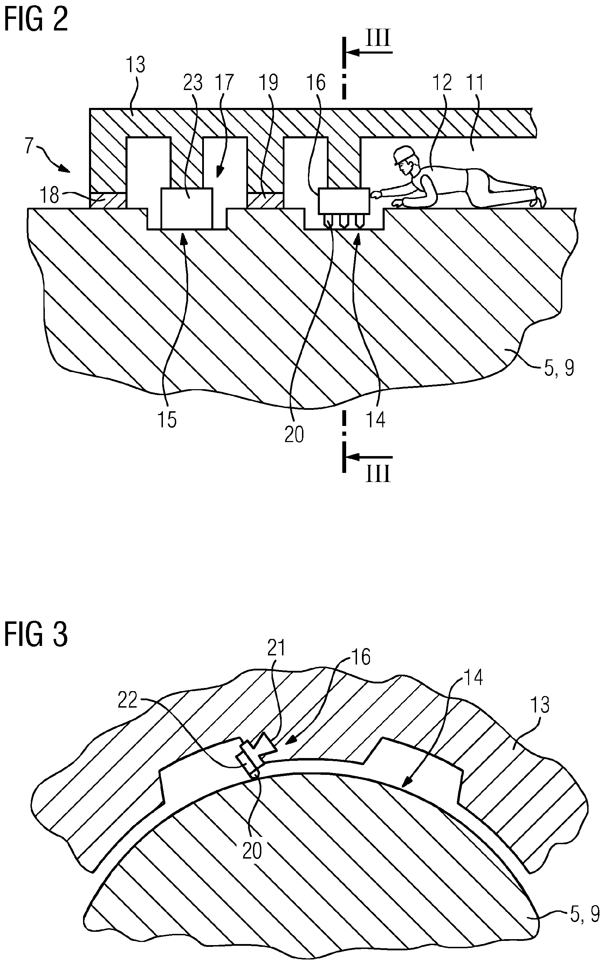

As shown in fig. 2, the bearing 7 comprises a fixed component 13 and the shaft 5 as a moving component 9. The moving component 9 comprises two raceways 14, 15 for the bearing 7. In the situation shown in fig. 2 a machining tool 16 is installed and adjusted by the worker 12 to remove material from the raceway 14. Alternatively material could be added to the raceway 14. The adding and/or removing of material to the raceway serves to reduce the roughness of the raceway 14 and therefore create as sufficiently smooth raceway 14 to use the raceway 14 as a raceway 14 of a fluid bearing. While the bearing 7 is refurbished the other raceway 15 is used to form a bearing. A multitude of bearing pads 23 are installed to the fixed component 13 along the circumference of the fixed component 13. Fluid, especially a lubricant, is added to the volume 17 that is sealed by the seals 18, 19. Therefore a fluid bearing, especially a Michell/Kingsbury tilting-pad fluid bearing, can be formed.

Once a sufficient smoothness of the raceway 14 is reached the pads 23 can be unmounted from the position shown in fig. 2 and shifted to a position opposite to the raceway 14. The area comprising the raceway 14 can then be provided with lubricant and sealed to form a fluid bearing. At a later point in time the raceway 15 can be refurbished and smoothed and the pads 23 can be switched back to the raceway 15.

Since the main shaft 5 is constantly supported during the refurbishment of the bearing 7 by a bearing formed by the raceway 15 and the additional bearing 8 the refurbishment can be performed in-situ without removing the shaft 5 from the wind turbine 1. Therefore a damage to the shaft 5, especially an insufficient smoothness of the raceway 14 or 15, can be repaired with relatively little effort and a crane is not necessarily required to refurbish the bearing 7 or 8.

The following example will focus on removing material from the raceway 14 by turning the area of the raceway 14 of the shaft 5. Obviously this approach can be modified by using a different type of machining and/or by adding material instead of removing it or by first adding material and then removing the superfluous material. This can e.g. be achieved by replacing the cutting tools 20 of the machining tool 16 by different tools used for different types of machining or by tools that can be used to add material to the raceway 14.

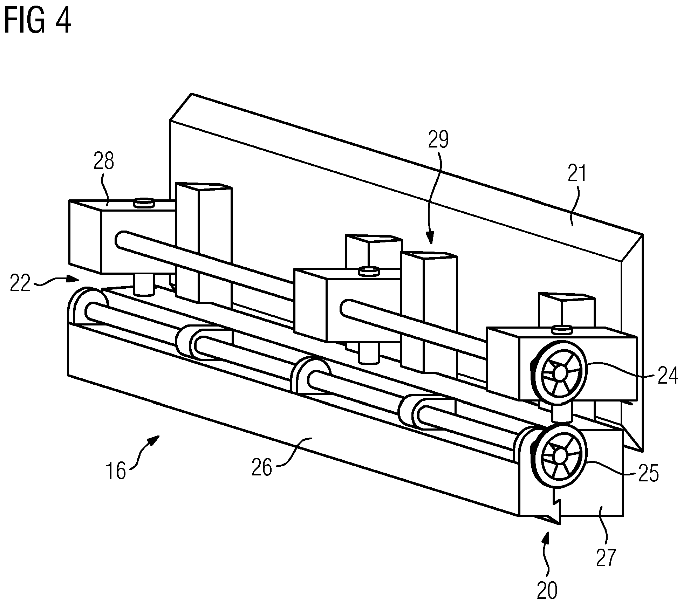

To refurbish the bearing 7 the worker 12 first gains access to the raceway 14 by removing a seal (not shown) and potentially a part of a case fixed to the fixed part 13. After ensuring that the shaft 5 is fixed in position, e.g. by adding the bearing pads 23 to the raceway 15 to provide a temporary up-wind bearing and blocking the rotation of the main shaft 5, the worker 12 removes all bearing pads 23 from the raceway 14 and installs the machining tool 16 instead of one of the bearing pads 23. As shown in fig. 3 and 4 the machining tool 16 can be axially inserted into an opening of the fixed component 13 of the bearing. The resulting dovetail junction defines the circumferential and the radial position of a fixed part 21 of the machining tool 16 with high acurecy. The axial position can be fixed by a positive or a frictional connection, e.g. by a screw that passes through the fixed portion 21 and presses on the fixed component 13.

As schematically shown in fig. 3 that shows a cut along the line III - III in fig. 2, and as shown in more detail in fig. 4, the cutting tools 20 are connected to the fixed part 21 of the machining tool 16 via a shifting mechanism 22 that allows for axial and radial shifting of the cutting tools 20. In the example the handwheels 24, 25 are used to adjust the axial and radial position of the cutting tools 20. The cutting tools 20 are attached to the part 26 that can be axially shifted with respect to the part 27 by turning the handwheel 25. A turning of the handwheel 24 is transmitted via angle gears 28 to move the angle gears 28 and with them the part 25 along the vertical rails 29 attached to the fixed part 21.

The worker can adjust the handwheels 24, 25 to put the cutting tools 20 into contact with the raceway 14 and slightly press them into the raceway, e.g. by (4 : 100) mm. If the shaft 5 is rotated after the worker 12 leaves the crawl space 11 the cutting tools 20 remove material from the raceway 14, therefore reducing geometrical tolerances and the surface roughness. To allow for a smooth turning of the raceway 14, a multitude of cutting tools 20 are used that are spaced along the axial direction of the bearing as shown in fig. 2. Only three cutting tools 20 are shown in fig. 2. In real life applications more, e.g. twenty or more, cutting tools 20 can be used. The cutting tools could e.g. be 10 mm wide be spaced apart by 16 mm. Alternatively a single cutting tool 20 could be used that preferably is less wide than the raceway 14.

After the shaft is turned by a certain angle, preferably by using the generator 10 as an electro motor, the rotation can be stopped and the cutting tools can be shifted in the axial direction by turning the handwheel 25. This process can be repeated until the complete width of the raceway 14 is turned down by the desired amount. Preferably, multiple rounds of turning down the shaft are performed with alternating directions of the axial shift. E.g. five depths changes of 0,04 mm each could be performed to remove a total depth of 0,20 mm to smooth the raceway 14. Axial shifting of the cutting tools could be 8 mm after each revolution of the shaft 5. If the total turning length is 24 mm in the axial direction, three revolutions are required for each depth change. Therefore a total number of 15 revolutions is needed to smooth the raceway 14 and therefore refurbish the bearing 7. If e.g. one revolution per minute is used during the turning of the raceway 14, the main time requirement will typically be the adjustment of the radial and axial position via the handwheels 24 and 25. Even with this manual adjustment the complete smoothing process can be performed in less than a day. Including a potentially necessary cleaning of the turning chips, the movement of the bearing pads 23 and the opening and closing of the sealing of the bearing 7, a total downtime of e.g. only two days can be achieved for refurbishing the bearing.

To avoid damage to the refurbished bearing a contamination of a lubricant by the turning chips needs to be avoided. This can either be achieved by using a powerful vacuum cleaner that is attached close to the cutting tools 20 or it can be achieved by cleaning the raceway after the turning, e.g. by a cleaning device using cleaning detergent, oil remover, etc.

Although the present invention has been described in detail with reference to the preferred embodiment, the present invention is not limited by the disclosed examples from which the skilled person is able to derive other variations without departing from the scope of the invention.

## Claims

1. Method for refurbishing a rotary bearing (7, 8), especially a rotary bearing (7, 8) of a wind turbine (1), the bearing (7, 8) comprising a fixed component (13) that supports a moving component (9) during the operation of the bearing (7, 8), wherein the fixed component (13) or the moving component (9) comprises a raceway (14) of the bearing (7, 8), **characterized in that** a roughness of the raceway (14) is reduced by adding material to and/or removing material from the raceway (14).

2. Method according to claim 1, **characterized in that** the adding and/or removing of material is performed while the component (13, 9) that comprises the raceway (14) is mounted to a device comprising the bearing (7, 8), especially a wind turbine (1), and/or while the moving component (9) of the bearing (7, 8) extends through the fixed component (13) of the bearing (7, 8) or vice versa.

3. Method according to claim 2, **characterized in that** the component (13, 9) that comprises the raceway (14) comprises an additional raceway (15) that is used to form a bearing (7) between the fixed and the moving component (13, 9) while the material is added or removed and/or **in that** the moving component (9) is supported by at least one further bearing (7, 8) of the device comprising the bearing (7, 8) while the material is added or removed.

4. Method according to one of the preceding claims, **characterized in that** the moving component (9) is rotated while material is added to and/or removed from the raceway (14).

5. Method according to one of the preceding claims, **characterized in that** a machining tool (16) is attached to the fixed component (13) in such a way that it contacts the raceway (14) that is formed by the moving component (9) or vice versa, wherein the moving component (9) is rotated with respect to the fixed component (13) to move the machining tool (16) along the raceway (14) in the circumferential direction of the bearing (7, 8) to remove material from the raceway (14).

6. Method according to claim 5, wherein the machining tool (16) comprises one cutting tool or multiple cutting tools (20), wherein the length of the contact area of the cutting tool in the axial direction of the bearing (7, 8) is shorter than the width of the raceway in the axial direction of the bearing (7, 8) or wherein the multiple cutting tools (20) are spaced apart from each other in the axial direction of the bearing (7, 8), wherein the moving component (13) is rotated through multiple revolutions and wherein the cutting tool or cutting tools (20) are shifted in the axial direction of the bearing (7, 8) between revolutions of the moving component (9) and/or during at least one of the revolutions of the moving component (9).

7. Method according to claim 5 or 6, **characterized in that** the machining tool (16) comprises one or multiple cutting tools (20), wherein the moving component is rotated through multiple revolutions, wherein the cutting tool or cutting tools (20) are shifted in the radial direction of the bearing (7, 8) between revolutions of the moving component (9) and/or during at least one of the revolutions of the moving component (9).

8. Bearing refurbishment arrangement, comprising a fixed component (13) and a moving component (9) designed to form a bearing (7, 8) and a machining tool (16) usable to remove material from a raceway (14) of the bearing (7, 8) during a refurbishing of the bearing (7, 8), especially during a refurbishing according to the method of one of the preceding claims, the raceway (14) being formed by the moving or the fixed component (9, 13), wherein the machining tool (16) is attached in such a way to the fixed component (13) that at least one cutting tool (20) of the machining tool (16) contacts the raceway (14) of the moving component (9) or vice versa.

9. Bearing refurbishment arrangement according to claim 8, **characterized in that** the moving component (9) is supported by a bearing (7) formed by the moving and the fixed component (9, 13) using an additional raceway (15) of the component (9) that comprises the raceway (14) and/or by at least one further bearing (7, 8) of the bearing refurbishment arrangement.

10. Bearing refurbishment arrangement according to claim 8 or 9, **characterized in that** the machining tool (16) is positively attached to the fixed or the moving component (9, 13), especially via a sliding dovetail junction.

11. Bearing refurbishment arrangement according to one of the claims 8 to 10, **characterized in that** the contact area of the cutting tool (20) in contact with the raceway (14) in axial direction of the bearing (7, 8) is shorter than the width of the raceway (14) or **in that** multiple cutting tools (20) are spaced apart from each other in the axial direction of the bearing (7, 8).

12. Bearing refurbishment arrangement according to one of the claims 8 to 11, **characterized in that** the cutting tool or tools (20) are attached to the fixed or the moving component (9, 13) via a shifting mechanism (22), that allows for an axial and/or radial shifting of the cutting tool or tools (20).

13. Wind turbine **characterized by** a bearing refurbishment arrangement according to one of the claims 8 to 12.

14. Wind turbine according to claim 13, **characterized in that** the moving component (9) is the main rotor shaft (5) of the wind turbine (1).

15. Wind turbine according to claim 13 or 14, **characterized in that** it comprises a crawl space (11) between the moving and the fixed component (9, 13) that allows a worker (12) to access the machining tool (16) to mount or unmount the machining tool (16) to or from the moving or the fixed component (9, 13) and/or to manually adjust the axial or radial position of the cutting tool or cutting tools (20) of the machining tool (16).
